(19) Europäisches Patentamt
European Patent Office
Office européen des brevets

(11) **EP 1 093 396 B1**

(12) **EUROPEAN PATENT SPECIFICATION**

(45) Date of publication and mention
of the grant of the patent:
**15.10.2003 Bulletin 2003/42**

(51) Int Cl.$^7$: **B01D 53/04**, D06M 14/18,
D06M 14/30

(21) Application number: **99929510.8**

(22) Date of filing: **05.07.1999**

(86) International application number:
**PCT/GB99/01993**

(87) International publication number:
**WO 00/001468 (13.01.2000 Gazette 2000/02)**

(54) **A GAS FILTER ELEMENT**

FILTERELEMENT FÜR GASE

ELEMENT DE FILTRE A GAZ

(84) Designated Contracting States:
**DE FR GB**

(30) Priority: **03.07.1998 GB 9814394**

(43) Date of publication of application:
**25.04.2001 Bulletin 2001/17**

(73) Proprietor: **Scimat Limited
Dorcan, Swindon SN3 5HY (GB)**

(72) Inventors:
 • **GENTILCORE, Giovanni
   Wiltshire SN6 4HU (GB)**
 • **COOK, John, Anthony
   Oxon SN7 8SJ (GB)**
 • **SINGLETON, Raymond, William
   Gloucestershire GL7 5QW (GB)**

(74) Representative: **Belcher, Simon James
Urquhart-Dykes & Lord
Tower House
Merrion Way
Leeds LS2 8PA (GB)**

(56) References cited:
**WO-A-93/01622          WO-A-98/58108
WO-A-98/58111          GB-A- 2 312 003**

 • **DATABASE WPI Section Ch, Week 199423
   Derwent Publications Ltd., London, GB; Class
   A14, AN 1994-189473 XP002118749 & JP 06
   128877 A (UNITIKA LTD), 10 May 1994
   (1994-05-10)**

**Description**

This invention relates to a method of treating a gas stream to adsorb at least one gaseous component of the gas stream, using a filter system which incorporates a filter element.

It can be important for certain processes to be carried out under conditions in which the atmosphere is carefully controlled, to minimise exposure of materials involved in the process to harmful atmospheric components. It can therefore be desirable to control the quantities of gaseous materials (including vapours) that are present in an environment, for example by controlling the amount of one gas that is present in a mixture of that gas with one or more other gases.

Control of atmospheric ammonia can be important in processes in which a polymerisation reaction is initiated by acid. Such processes are used in the manufacture of semiconductors. The problem of ammonia contamination is particularly significant because ammonia is generated naturally in the human metabolic cycle.

It is known to remove ammonia from an atmosphere by passing it through a filter which contains an appropriate adsorbent, for example an activated carbon filter. The present invention seeks to provide a filter element which can be used to adsorb one or more selected components of a gas mixture, which is highly adsorbent and which presents low resistance to flow of gas through it.

EP-A-596441 discloses an air purifying filter which comprises an ion-exchange filter fibre filter and a high performance filter comprising glass fibres. The ion-exhcnage filter fibre has hydrophilic groups bonded to the surface of a substrate.

Accordingly, in one aspect, the invention provides a method of treating treating a gas stream to adsorb at least one gaseous component of the gas stream, having the features specified in claim 1.

The element of the present invention has the advantage that it is able to adsorb large quantities of a gas component in a gas mixture while presenting a relatively low resistance to flow of the gas through it. This performance can be obtained in the filter element of the invention without having to incorporate large quantities of filter material, which can otherwise give rise to undesirably large thickness or weight in the element.

The fabric can be formed conventional fabric forming processes such as weaving, knitting, braiding and so on. Preferably, the fabric is a non-woven fabric. Suitable non-woven fabrics can be made by processes such as (a) melt blowing, (b) spinning, and (c) wet or dry laying. The formation of fine fibre fabrics can involve techniques such as fibre splitting (for example by mechanical combing or other processing, or by water entanglement), and spun lace processing (for example by water entanglement). It can be preferred for the fabric to have been formed by melt blowing. The structure of a melt-blown fabric is stable when placed under stress. A melt-blown fabric has the further advantage of small fibres size (which is generally less than about 5 $\mu$m, and often as low as 1 $\mu$m or less) which enables a filter to be made without undesirably high resistance to air flow, and with a high surface area to which gas to be treated is exposed when passing through the fabric, for example by enabling the thickness of the filter to be kept small.

The use of fine fibres in the filter element of the invention has the advantage that it allows relatively large quantities of the adsorbent for the selected gas component to be incorporated into the element. Preferably, the conditions of the grafting reaction result in an ion exchange capacity of at least about 1.5 mmol per gram of the fibres, more preferably at least about 2.5 mmol.g$^{-1}$, especially at least about 4.0 mmol.g$^{-1}$, more especially at least about 5.0 mmol. g$^{-1}$, for example at least about 6.0 mmol.g$^{-1}$. Preferably, the ion exchange capacity is at least about 100 mmol.m$^{-2}$, more preferably at least about 175 mmol.m$^{-2}$, especially at least about 350 mmol.m$^{-2}$. Preferably, the fabric of the filter element contains at least about 1.0 mmol of vinyl monomer per gram of the fibres, more preferably at least about 2.5 mmol.g$^{-1}$, especially at least about 3.5 mmol.g$^{-1}$, for example at least about 5.0 mmol.g$^{-1}$.

A further advantage of the use of fine fibres is that the filter element can also trap particulate contaminants that are present in the gas that is to be treated.

The fibres of the fabric will be formed from a polymeric material which is capable of undergoing the polymerisation reaction with the vinyl monomer on its surface. The fibres can include polymers such as for example polyamides, polyesters and naturally occurring materials such as cellulose based materials. Preferred polymeric materials are polyolefins such as polyethylenes and, especially, polypropylenes, and polyesters such as polyethylene terephthalate.

Preferably, the material of the surface of at least some of the fibres, for example at least about 40% by weight, preferably at least about 60%, more preferably at least about 80%, comprises polypropylene. Preferably, at least 40% by weight of the material of the fibres of the fabric is polypropylene, more preferably at least about 60%, especially at least about 80%.

Preferably, the material of substantially all of the fibres is substantially homogeneous throughout their thickness, so that those fibres are formed substantially from polypropylene (with appropriate additives where necessary).

The fabric can be made from fibres comprising more than one material, for example more than one polymer or a polymer having different physical properties in different regions of the fibres or the fabric. For example, the fabric may be made from at least some fibres formed from two polymers such as bicomponent fibres with the components arranged coaxially or side-by-side. The fibres may be suitable for the application of splitting techniques as discussed above.

The use of fibres which are homogeneous in their composition, and especially of fibres which are formed from a predominant amount of one material, has the advantage that the distribution of the vinyl monomer is relatively uniform over the surface of the fibres. This can help to increase the efficiency of gas adsorption.

The distribution of vinyl monomer on the surfaces of the fibres of the fabric can be controlled by incorporating use of species that inhibit chain transfer reactions. Examples of suitable species include copper sulphate, iron (II) sulphate, and metal chromates. Such species can be used to control the lengths of chains of the vinyl monomer that are grafted to the fibre surfaces.

It is particularly preferred that the fabric is formed from fibres which comprise a single polymer such as a polyolefin (for example a polypropylene) or a polyester (for example a polyethylene terephthalate). This has the advantage that the physical properties of the fabric are those of a non-woven fabric formed from polypropylene fibres which can be preferred compared with other polyolefin fibres. Compared with bicomponent fibres, the use just of polypropylene fibres has the advantage that the fibres can be made thin without increasing the cost undesirably. Further advantages of using certain polyolefin materials, especially certain polypropylene based materials, include that they are capable of being heat formed into desired configurations, which can be useful when forming the filter element from the treated fabric, and stability to certain aggressive chemical media including acidic and basic media.

The fabric can be formed from fibres which include up to about 15% by weight of another polymeric component, more preferably no more than about 10% by weight, especially no more than about 5% by weight. For example, it might be polyethylene which can be used with polypropylene fibres.

Preferably, the grafting reaction is carried out under conditions which also result in crosslinking of the material of the polymer of the fibres. For example, the grafting reaction between the fabric and the vinyl monomer can involve exposure of the fabric to ultraviolet radiation while impregnated with a solution of the vinyl monomer. Crosslinking of the material of the fibres, for example by this ultraviolet initiated reaction, can have the advantage that it enables hydrophilic fabrics to be made from non-woven fabrics which, due to their construction, have physical properties prior to the grafting reaction which make them unsuitable for many applications because of the conditions to which such fabrics are exposed, prior to and during use. Such fabrics include those made by techniques such as spinning, and wet or dry laying, without a subsequent bonding step. It provides the advantage of enabling a fabric to be made with enhanced physical properties, without the disadvantages arising from use of fibres which have a large size.

It can be preferred for some applications for crosslinks to be formed in the material of the fibres, or in the grafted vinyl monomer, or both, by means of a chemical crosslinking agent, in addition to or instead of crosslinks that are formed by a radiation initiated reaction. For example, the fabric might be made to react with a crosslinking agent such as examples of suitable crosslinking agents include divinyl monomers, triallyl isocyanurate (TAIC), triallyl cyanurate (TAC), 1,5-hexadiene-3-ol, 2,5-dimethyl-1,5-hexadiene, 1,5-hexadiene, 1,7-octadiene, 3,7-dimethyl-2,6-octadiene-1-ol, and certain diacrylates such as polyethylene glycol diacrylate and dimethacrylate.

The vinyl monomer which is graft-polymerised with the material of the fibre surface can be capable of reacting with an acid or a base directly to form a salt, or indirectly to form a salt after appropriate work up, perhaps involving for example hydrolysis or sulphonation. Preferred vinyl monomers include ethylenically unsaturated carboxylic acids and esters thereof such as acrylic acid, methacrylic acid, methyl acrylate, and methylmethacrylate. Other vinyl monomers which might be used include acrylamide, vinylpyridine, vinylpyrrolidone, and styrene-sulphonic and 2-acrylamido-2-methyl-1-propane sulphonic acids (and salts thereof).

An advantage of using an acidic vinyl monomer is that the fabric can be treated with base to convert the grafted monomer into the anionic form, especially the potassium or sodium salt. This can allow the fabric to adsorb acidic gases (for example HCl or HF) from the gas to be treated.

The filter element can be made by a method which comprises:

(a) impregnating a fabric with a solution of a vinyl monomer capable of reacting with an acid or a base to form a salt directly or indirectly, the solvent being one which does not evaporate significantly in the subsequent step of exposing the fabric to radiation, and

(b) exposing the impregnated fabric to ultraviolet radiation while the exposure of the fabric to oxygen is restricted, to cause the monomer and the material of the fibres to co-polymerise,

(c) forming the fabric into an element which can be located in a filter housing for a gas stream flowing through the housing to flow through the element.

The use of a solvent for the vinyl monomer during the grafting reaction which does not evaporate to a significant degree during ultraviolet irradiation has been found to confer the advantages of providing greater uniformity of properties of the resulting fabric throughout the thickness of the fabric. Thus there is greater uniformity in the degree of grafting throughout the thickness of the fabric, leading to improved gas absorption properties through the fabric. It is believed that this might arise at least in part because of the transparency of the fabric which is retained as a result of the retention of the solvent in the pores of the fabric. It has also been found that the degree or adverse effects or both of homopolymerisation of the vinyl monomer can be reduced by selection of an appropriate solvent.

Suitable solvents for use in the method of the invention will generally be transparent to ultraviolet radiation, have no atoms which are abstractable when exposed to radiation, have a high specific heat and a high latent heat of vaporisation, and will not react adversely with the material of the fibres of the separator. Preferred solvents will have a boiling point which is greater than about 50°C, preferably greater than about 70°C. It is also preferred that the boiling point of the solvent be no higher than a temperature at which the film might be damaged during the course of the irradiation step of the method. For example, the boiling point of the solvent might be selected to be less than the temperature at which the material of the fibres melts or softens. Particularly preferred solvents have a latent heat of vaporisation which is greater than about 1000 $J.g^{-1}$, preferably greater than about 1500 $J.g^{-1}$, more preferably greater than about 2000 $J.g^{-1}$, and/or a specific heat capacity which is greater than about 2.0 $J.g^{-1}.K^{-1}$, preferably greater than about 3.0 $J.g^{-1}.K^{-1}$, more preferably greater than about 4.0 $J.g^{-1}.K^{-1}$. A value of specific heat capacity, or of latent heat of vaporisation, within these ranges has the advantage that the solvent in the reaction has an enhanced ability to dissipate heat without evaporating to a significant degree, giving rise to the advantages referred to above. A particularly significant further advantage is that the formation of product from the homopolymerisation reaction of the vinyl monomer is restricted, and any such product which is formed is retained in solution rather than being deposited in the pores within the fabric. This allows the product to be removed easily from the fabric by washing. The control over the formation of the homopolymerisation product can be achieved without use of inhibiting agents, which can cause contamination problems when the filter element is in use in certain applications. Water is a particularly preferred solvent.

The ultraviolet radiation initiated polymerisation reaction can be completed surprisingly quickly, for example by exposing the impregnated fabric to radiation for as little as 15 seconds, even as little as 5 or 10 seconds, and it has been found that the fabric after reaction contains a significant amount of grafted monomer which can then be active in the gas adsorption process. The amount of the grafted monomer can also be increased by repeating the impregnation and irradiation steps.

Techniques by which exposure of the impregnated fabric to oxygen can be restricted include, for example, carrying out the ultraviolet irradiation step in an inert atmosphere, for example in an atmosphere of argon or nitrogen, or sealing the impregnated fabric between sheets of material which are impervious to oxygen, but are transparent to ultraviolet radiation of appropriate wavelength for initiating the co-polymerisation reaction.

The improvement in physical properties that can be obtained in a fabric that has been subjected to the grafting process can include an increase in tensile strength of the fabric, measured in its machine direction or cross direction or both. The tensile strength can be increased as a result of the copolymerisation reaction, compared with the tensile strength prior to the reaction, by at least about 50%, preferably at least about 100%, more preferably at least about 150%, for example at least about 200%. Accordingly, the ratio of the tensile strength of the fabric measured in the machine direction after the copolymerisation reaction to that of the fabric prior to the reaction can be at least about 1.5, preferably at least about 2.0, especially at least about 3.0.

The use of fine fibres enables a filter element to be provided which has a low weight and small thickness. Preferably, the basis weight of the dry fabric after the grafting reaction is not more than about 250 $g.m^{-2}$, more preferably not more than about 200 $g.m^{-2}$, especially not more than about 170 $g.m^{-2}$, for example not more than about 160 $g.m^{-2}$, about 150 $g.m^{-2}$, or even about 120 $g.m^{-2}$. Preferably, the basis weight of the fabric prior to the grafting reaction is not more than about 120 $g.m^{-2}$, more preferably not more than about 100 $g.m^{-2}$, especially not more than about 80 $g.m^{-2}$. Preferably, the increase in dry basis weight is at least about 15%, more preferably at least about 25%, especially at least about 30%, for example at least about 40% or 50%.

Preferably, the thickness of the fabric, measured using test method DIN 53105 which involves lowering a 2.0 kg weight onto a 2.0 $cm^2$ sample of the fabric at a speed of 2.0 $mm.s^{-1}$, is not more than about 2.0 mm, more preferably not more than about 1.5 mm, especially not more than about 1.0 mm.

Preferably, the fabric is subjected to a calendering step to reduce its thickness to a value within the range referred to above (or from a value within the range referred to above to a smaller value). Preferably, the reduction in thickness is at least about 5%, preferably at least about 15%, more preferably at least about 25%, and less than about 60%, preferably less than about 45%, more preferably less than about 40%. Calendering can have the advantage of reducing the thickness of the fabric. The calendering step may take place before or after the material of the fabric is reacted with the graft-polymerisation solution.

Calendering the fabric before the graft-polymerisation reaction has been found to give rise to increased rates of the reaction. A fabric that has been calendered after the graft reaction can have an improved ability to absorb a component, especially ammonia, which might be present in a gas mixture which is to be treated. Moreover, fibres of the fabric are less likely to be damaged physically as a result of the calendering step when it is carried out after the graft polymerisation reaction.

The filter element can comprise a laminate of two or more fabrics. Preferably, at least one of the fabrics is a non-woven fabric, especially a melt-blown non-woven fabric.

The filter element of the invention can be used in a filter system which comprises a housing having an inlet and an outlet for gas to flow under low pressure into and out of the housing respectively, and a gas filter element as discussed above, which is located within the housing for gas to flow through between the inlet and the outlet. The filter element will be configured appropriately for such use. For example, it can be formed into a cylindrical cartridge for gas to flow through its wall when located in the housing. The formation of the fabric into a cartridge can involve processes such as folding, pleating, lamination and so on. Pleated rectangular filter elements are particularly preferred for clean room applications.

Measurement of ion exchange capacity

A sample of membrane about 0.1 g is converted into the acid (H$^+$) form by immersion in 1.0 M hydrochloric acid at 60°C for 2 hours. The sample is washed in distilled water until the washing water shows a pH in the range of about 6 to 7. The sample is then dried to constant weight at 70°C.

The dried sample is placed in a 100 ml polyethylene bottle to which is added accurately 10 ml of approximately 0.1 M potassium hydroxide. Additional distilled water can be added to immerse the sample fully. A further 10 ml of potassium hydroxide is added to a second polyethylene bottle, together with the same amount of distilled water as that added to the bottle containing the sample. Both bottles are stored at 60°C for at least two hours.

After being allowed to cool, the contents of each bottle are transferred to glass conical flasks, and the amount of potassium hydroxide in each is determined by titration with standardised 0.1 M hydrochloric acid, using a phenolphthalein indicator.

The ion exchange capacity, measured in millimole per gram, of the membrane in the dry acid (H$^+$) form is calculated according to the equation:

$$IEC = \frac{t_2 - t_1}{10\,W}$$

where $t_1$ is the titration value of HCl from bottle with the sample, $t_2$ is the titration value of HCl from bottle without the sample, and W is the weight of the dried membrane in acid (H$^+$) form.

The ion exchange capacity measured in millimole per square metre, is calculated according to the equation:

$$IEC\ (mmol.m^{-2}) = IEC\ (mmol.g^{-1}) \times Basis\ weight\ (g.m^{-2})$$

Examples of treatments of fabrics for use in the filter element of the invention are set out below.

EXAMPLE 1

A meltblown nonwoven polypropylene fabric with a thickness of 270 µm and a fibre size of about 1 to 3 µm and a basis weight of 70 g.m$^{-2}$ was immersed in a solution formulated as follows (percentage by weight):

| Component | Weight (%) |
|---|---|
| Acrylic Acid | 30.0 |
| Benzophenone | 0.25 |
| Surfactant (Lutensol ON70™) | 0.5 |
| Water | 69.25 |

The impregnated fabric was maintained in an atmosphere of nitrogen and passed through an irradiation chamber defined by quartz glass. Parallel medium pressure mercury lamps (power output 120 W.cm$^{-1}$) were positioned on opposite sides of the chamber outside the quartz glass walls. The distance between fabric and the lamps was 16 cm. Each lamp provided a 10 cm wide parallel ultraviolet light beam. The total exposure time of the fabric to the radiation was about 12 seconds.

The fabric was then washed in de-ionised water to remove unreacted components and then dried in an air oven at approximately 80°C.

The properties of the treated fabric are set out below, and compared with the corresponding properties of the polypropylene fabric starting material. Tensile strength and elongation were measured using test method ASTM D882.

| Property | Ungrafted | Grafted |
|---|---|---|
| Ion Exchange Capacity (mmol.g$^{-1}$) | 0.0 | 3.8 |
| Ion Exchange Capacity (mmol.m$^{-2}$) | 0.0 | 380.0 |
| Basis Weight (g.m$^{-2}$) | 70.0 | 100.0 |
| Thickness (µm) | 270.0 | 360.0 |
| Machine Direction Tensile Strength (N.m$^{-1}$) | 1000.0 | 3000.0 |
| Machine Direction Elongation (%) | 40.0 | 15.0 |

EXAMPLE 2

A laminate was formed from a meltblown polypropylene nonwoven fabric and two nonwoven fabrics formed from spun fibres arranged on opposite surfaces of the melt blown fabric. The meltblown fabric had a basis weight of 14 g.m$^{-2}$ and a fibre size of about 1 to 5 µm. The spun fibre fabric had a basis weight 21.5 g.m$^{-2}$ and a fibre size of 15 to 20 µm. The laminate was created by the localised application of heat and pressure to form localised welds between the fibres of the fabrics. The laminate had a thickness of 260 µm.

The laminate was impregnated with an acrylic acid solution, irradiated, washed and dried as described in Example 1 above.

The properties of the treated laminate are set out below, and compared with the corresponding properties of the polypropylene laminate starting material:

| Property | Ungrafted | Grafted |
|---|---|---|
| Ion Exchange Capacity (mmol.g$^{-1}$) | 0.0 | 2.8 |
| Ion Exchange Capacity (mmol.m$^{-2}$) | 0.0 | 209.2 |
| Basis Weight (g.m$^{-2}$) | 57.0 | 74.7 |
| Thickness (µm) | 260.0 | 350.0 |
| Machine Direction Tensile Strength (N.m$^{-1}$) | 1200.0 | 2930.0 |
| Machine Direction Elongation (%) | 40.0 | 40.0 |

EXAMPLE 3

The treated material described in Example 1 was further impregnated with acrylic acid solution, irradiated, washed and dried as described in Example 1 above.

The properties of this twice-treated material are set out below, and compared with the corresponding properties of the polypropylene starting material:

| Property | Ungrafted | Grafted |
|---|---|---|
| Ion Exchange Capacity (mmol.g$^{-1}$) | 0.0 | 8.17 |
| Ion Exchange Capacity (mmol.m$^{-2}$) | 0.0 | 1340.0 |
| Basis Weight (g.m$^{-2}$) | 57.0 | 164.0 |
| Thickness (µm) | 260.0 | 544.0 |
| Machine Direction Tensile Strength (N.m$^{-1}$) | 1200.0 | 3060.0 |
| Machine Direction Elongation (%) | 40.0 | 11.0 |

EXAMPLE 4

A meltblown nonwoven polypropylene fabric with a thickness of 190 µm, a fibre size of about 1 to 3 µm, and a basis weight of 43 g.m$^{-2}$, was immersed in a solution formulated as that described in Example 1.

The impregnated fabric was then irradiated with ultraviolet light as described in Example 1 above with the following differences. The distance between the fabric and the lamps was 10 cm and the total exposure time of the fabric to the radiation was about 9 seconds.

The properties of the treated material are set out below, and compared with the corresponding properties of the polypropylene starting material:

| Property | Ungrafted | Grafted |
|---|---|---|
| Ion Exchange Capacity (mmol.g$^{-1}$) | 0.0 | 2.42 |
| Ion Exchange Capacity (mmol.m$^{-2}$) | 0.0 | 133.0 |
| Basis Weight (g.m$^{-2}$) | 43.0 | 54.9 |
| Thickness (μm) | 190.0 | 251.0 |
| Machine Direction Tensile Strength (N.m$^{-1}$) | 700.0 | 1170.0 |
| Machine Direction Elongation (%) | 50.0 | 20.0 |

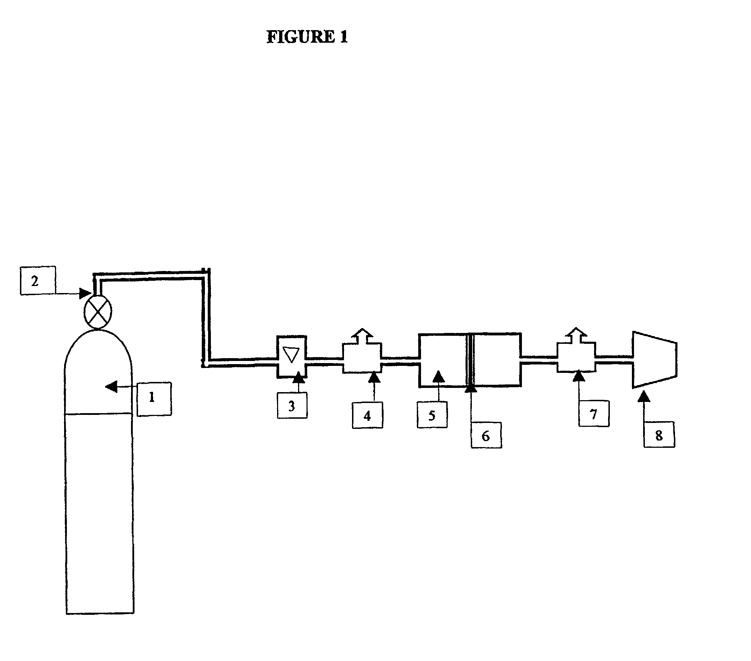

The ability of the treated nonwoven fabric to remove ammonia from a gas stream was measured using the absorption apparatus shown schematically in Figure 1. Shown in Figure 1 is a compressed air cylinder 1 containing 2.5 ppm ammonia, a control valve 2 and gas flowmeter 3. The sample test holder 5 houses the fabric 6 under test. The apparatus includes gas sampling ports 4, 7 and an exhaust port 8.

Air containing 2.5 ppm ammonia was passed through the fabric under test at a flow rate of 500 cm$^3$.min$^{-1}$. The area of the fabric exposed to the gas stream was 15.9 cm$^2$. The concentration of ammonia in the gas stream was measured using Dräeger gas sampling tubes (no 810171) before and after passing through the fabric using the gas sampling ports.

The efficiency, measured in percent, of the treated fabric to absorb ammonia from the gas stream is calculated according to the equation:

$$Efficiency = \frac{C_1 - C_2}{C_1} \times 100$$

where $C_1$ is the concentration of ammonia in the gas stream before passing through the treated fabric and $C_2$ is the concentration of ammonia in the gas stream after passing through the treated fabric.

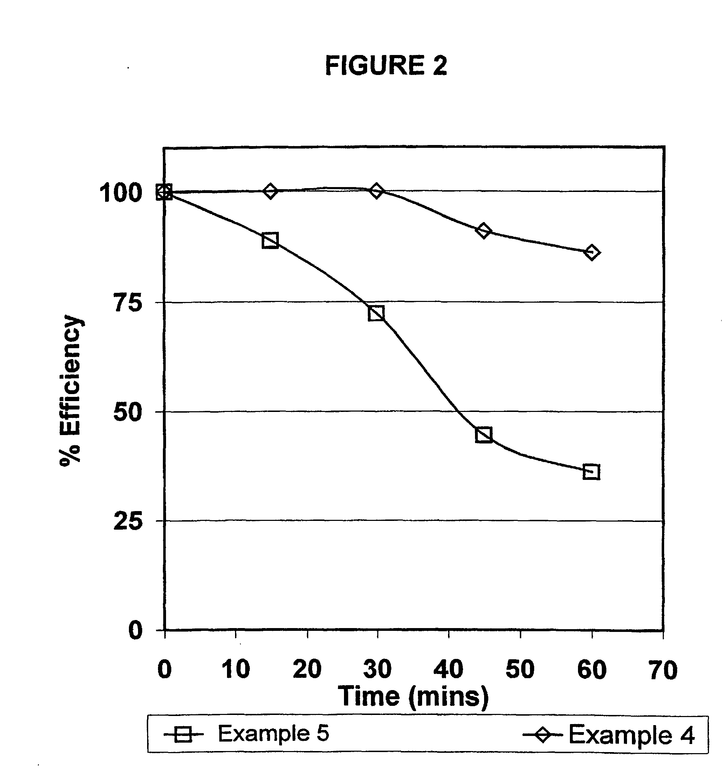

The test results for the above example are presented in Figure 2 and show that the treated fabric of the present invention can remove ammonia at 100% efficiency for a prolonged period of time.

EXAMPLE 5

A nonwoven wet laid fabric with a thickness of 215 μm, a basis weight of 68 g.m$^{-2}$ and containing composite fibres of size 15 to 20 μm consisting of polypropylene core and polyethylene sheath, was impregnated with an acrylic acid solution, irradiated, washed and dried as described in Example 4 above. The irradiation time was 13 seconds.

The properties of the treated material are set out below, and compared with the corresponding properties of the starting material:

| Property | Ungrafted | Grafted |
|---|---|---|
| Ion Exchange Capacity (mmol.g$^{-1}$) | 0.0 | 1.55 |
| Ion Exchange Capacity (mmol.m$^{-2}$) | 0.0 | 124.0 |
| Basis Weight (g.m$^{-2}$) | 68.0 | 79.7 |
| Thickness (μm) | 215.0 | 238.0 |
| Machine Direction Tensile Strength (N.m$^{-1}$) | 3000.0 | 4460.0 |
| Machine Direction Elongation (%) | 32.0 | 23.0 |

The ammonia absorption ability of the treated fabric was measured using the same test procedure as that described in Example 4. The results are presented in Figure 2 and show that the Example 5 filter has inferior ammonia absorption capabilities compared with the material used in Example 4.

EXAMPLE 6

A grafted meltblown nonwoven polypropylene fabric was made according to the procedure described in Example 4 above with the difference that the irradiation time was increased to 13 seconds.

The properties of the treated material are set out below, and compared with the corresponding properties of the polypropylene starting material:

| Property | Ungrafted | Grafted |
|---|---|---|
| Ion Exchange Capacity (mmol.g$^{-1}$) | 0.0 | 4.02 |
| Ion Exchange Capacity (mmol.m$^{-2}$) | 0.0 | 265.0 |
| Basis Weight (g.m$^{-2}$) | 43.0 | 65.9 |
| Thickness (μm) | 190.0 | 281.0 |
| Machine Direction Tensile Strength (N.m$^{-1}$) | 700.0 | 1540.0 |
| Machine Direction Elongation (%) | 50.0 | 14.6 |

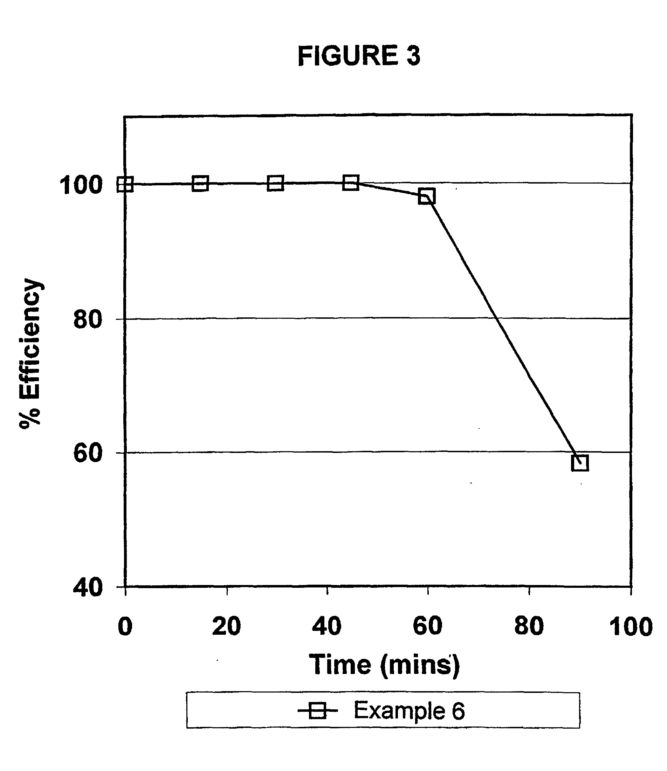

The ammonia absorption capabilities of the treated fabric were determined as described in Example 4. The results are shown in Figure 3 and demonstrate that increase in acrylic acid graft level improves the ammonia absorption ability of the treated fabric.

## Claims

1.  A method of treating a gas stream to adsorb at least one gaseous component of the gas stream, which comprises passing the gas stream over or through a fabric formed from fibres of which at least about 80% by weight are substantially homogeneous throughout their thickness so that those fibres are formed substantially from polypropylene, in which the sizes of those polypropylene fibres is not more than about 5 μm, the fibres having undergone a copolymerisation reaction with a vinyl monomer which is capable of reacting with an acid or a base to form a salt directly or indirectly under conditions which result in grafting of the vinyl monomer to the surfaces of the fibres, in which the grafted vinyl monomer on the surface of the fibres enhances the ability of the fibres to adsorb the said gaseous component.

2.  A method as claimed in claim 1, in which the fabric is a non-woven fabric, which preferably has been formed by melt blowing.

3.  A method as claimed in claim 1 or claim 2, in which the conditions of the grafting reaction result in an ion exchange capacity of at least about 1.5 mmol per gram of the fibres.

4.  A method as claimed in any one of claims 1 to 3, in which the grafting reaction is carried out under conditions which also result in crosslinking of the material of the polymer of the fibres.

5.  A method as claimed in any one of claims 1 to 4, in which the grafting reaction between the fabric and the vinyl monomer involves exposure of the fabric to ultraviolet radiation while impregnated with a solution of the vinyl monomer.

6.  A method as claimed in any one of claims 1 to 5, in which the basis weight of the dry fabric after the grafting reaction is not more than about 170 g.m$^{-2}$.

7.  A method as claimed in any one of claims 1 to 6, in which the thickness of the fabric after the grafting reaction is not more than about 1.5 mm.

8.  A method as claimed in any one of claims 1 to 6, which comprises a laminate of at least two fabrics.

9.  A method as claimed in claim 8, in which at least one of the said non-woven fabrics is a melt blown fabric.

10. A method as claimed in any one of claims 1 to 9, in which the gas filter element is incorporated into a filter system which comprises a housing having an inlet and an outlet for gas to flow under pressure into and out of the housing respectively, in which the gas filter element is located within the housing for gas to flow through it between the inlet and the outlet.

11. A gas filter system which comprises a housing having an inlet and an outlet for a gas stream to flow under pressure into and out of the housing respectively, and a gas filter element for adsorbing at least one gaseous component of a gas stream, which comprises a fabric formed from fibres of which at least about 80% by weight are substantially homogeneous throughout their thickness so that those fibres are formed substantially from polypropylene, in which the sizes of those polypropylene fibres is not more than about 5 µm, the fibres having undergone a copolymerisation reaction with a vinyl monomer which is capable of reacting with an acid or a base to form a salt directly or indirectly under conditions which result in grafting of the vinyl monomer to the surfaces of the fibres.

**12.** A system as claimed in claim 11, in which the fabric is a non-woven fabric, which preferably has been formed by melt blowing.

**13.** A system as claimed in claim 11 or claim 12, in which the conditions of the grafting reaction result in an ion exchange capacity of at least about 1.5 mmol per gram of the fibres.

**14.** A system as claimed in any one of claims 11 to 13, in which the grafting reaction is carried out under conditions which also result in crosslinking of the material of the polymer of the fibres.

**15.** A system as claimed in any one of claims 13 to 14, in which the grafting reaction between the fabric and the vinyl monomer involves exposure of the fabric to ultraviolet radiation while impregnated with a solution of the vinyl monomer.

**16.** A system as claimed in any one of claims 11 to 15, in which the basis weight of the dry fabric after the grafting reaction is not more than about 170 g.m$^{-2}$.

**17.** A system as claimed in any one of claims 11 to 16, in which the thickness of the fabric after the grafting reaction is not more than about 1.5 mm.

**18.** A system as claimed in any one of claims 11 to 16, which comprises a laminate of at least two fabrics.

**19.** A system as claimed in claim 18, in which at least one of the said non-woven fabrics is a melt blown fabric.


## Patentansprüche

**1.** Verfahren zur Behandlung eines Gasstroms, bei dem zumindest ein gasförmiger Bestandteil des Gasstroms absorbiert und bei dem der Gasstrom über oder durch ein Textilmaterial geleitet wird, das aus Fasern besteht, die zu mindestens etwa 80 Gew.-% im Wesentlichen in ihrer Dicke homogen sind, so, dass diese Fasern im Wesentlichen aus Polypropylen bestehen, wobei diese Polypropylenfasern nicht größer als etwa 5 µm sind und diese einer Copolymerisationsreaktion unterzogen wurden mit einem Vinylmonomer, das in der Lage ist, mit einer Säure oder einer Base direkt oder indirekt zu einem Salz zu reagieren, unter Bedingungen, die zu einer Aufpfropfung des Vinylmonomers auf die Oberfläche der Fasern führt, wobei das auf die Oberfläche der Faser gepfropfte Vinylmonomer die Fähigkeit der Fasern, besagten gasförmigen Bestandteil zu absorbieren, verbessert.

**2.** Verfahren nach Anspruch 1, bei dem das Textilmaterial ein Vliesstoff ist, der vorzugsweise durch Schmelzblasen hergestellt wurde.

**3.** Verfahren nach Anspruch 1 oder 2, bei dem die Bedingungen der Aufpfropfungsreaktion zu einer Ionenaustauschkapazität von mindestens etwa 1,5 mmol pro Gramm der Fasern führen.

**4.** Verfahren nach einem der vorangehenden Ansprüche, bei dem die Aufpfropfungsreaktion unter Bedingungen durchgeführt wird, die zudem zu einer Quervernetzung des Polymermaterials der Fasern führen.

**5.** Verfahren nach einem der vorangehenden Ansprüche, bei dem bei der Aufpfropfungsreaktion zwischen dem Textilmaterial und dem Vinylmonomer das Textilmaterial ultravioletter Strahlung ausgesetzt wird, während es mit einer Lösung des Vinylmonomers imprägniert wird.

**6.** Verfahren nach einem der vorangehenden Ansprüche, bei dem die flächenbezogene Masse des trockenen Textilmaterials nach der Aufpfropfungsreaktion nicht größer als etwa 170 g/m$^2$ ist.

**7.** Verfahren nach einem der Ansprüche 1-6, bei dem die Dicke des Textilmaterials nach der Aufpfropfungsreaktion nicht größer als etwa 1,5 mm ist.

**EP 1 093 396 B1**

**8.** Verfahren nach einem der Ansprüche 1 bis 6, welches ein Laminat mindestens zweier Textilmaterialien umfaßt.

**9.** Verfahren nach Anspruch 8, bei dem mindestens einer der besagten Vliesstoffe ein schmelzgeblasenes Textilmaterial ist.

**10.** Verfahren nach einem der Ansprüche 1-9, bei dem das Gasfilterelement in ein Filtersystem eingebaut ist, das ein Gehäuse umfasst, das eine Eintrittsöffnung und eine Austrittsöffnung hat, so dass das Gas unter Druck jeweils in das Gehäuse hinein und aus dem Gehäuse hinaus strömt, und bei dem sich das Filterelement im Gehäuse befindet, so dass das Gas zwischen Eintritt und Austritt durch den Filter strömt.

**11.** Gasfiltersystem, das ein Gehäuse umfasst, mit einer Eintrittsöffnung und einer Austrittsöffnung, durch die ein Gasstrom unter Druck jeweils in das Gehäuse hinein und aus dem Gehäuse hinaus strömt, und ein Gasfilterelement zur Absorption mindestens eines gasförmigen Bestandteils eines Gasstroms, das ein Textilmaterial umfasst, welches aus Fasern besteht, die zu mindestens etwa 80 Gew.-% in ihre Dicke im Wesentlichen homogen sind, so, dass diese Fasern im Wesentlichen aus Polypropylen bestehen, wobei diese Polypropylenfasern nicht größer als etwa 5 μm sind und einer Copolymerisationsreaktion unterzogen mit einem Vinylmonomer wurden, das in der Lage ist, mit einer Säure oder einer Base direkt oder indirekt zu einem Salz zu reagieren unter Bedingungen, die zu einer Aufpfropfung des Vinylmonomers auf die Oberfläche der Fasern führt.

**12.** System nach Anspruch 11, bei dem das Textilmaterial ein Vliesstoff ist, der vorzugsweise durch Schmelzblasen hergestellt wurde.

**13.** System nach Anspruch 11 oder 12, bei dem die Bedingungen der Aufpfropfungsreaktion zu einer Ionenaustauschkapazität von mindestens etwa 1,5 mmol pro Gramm der Fasern führen.

**14.** System nach einem der Ansprüche 11 bis 13, bei dem die Aufpfropfungsreaktion unter Bedingungen durchgeführt wird, die zudem zu einer Quervernetzung des Polymermaterials der Fasern führen.

**15.** System nach einem der Ansprüche 13 bis 14, bei dem bei der Aufpfropfungsreaktion zwischen dem Textilmaterial und dem Vinylmonomer das Textilmaterial ultravioletter Strahlung ausgesetzt wird, während es mit einer Lösung des Vinylmonomers imprägniert wird.

**16.** System nach einem der Ansprüche 11 bis 15, bei dem die flächenbezogene Masse des trockenen Textilmaterials nach der Aufpfropfungsreaktion nicht größer als etwa 170 g/m$^2$ ist.

**17.** System nach einem der Ansprüche 11 bis 16, bei dem die Dicke des Textilmaterials nach der Aufpfropfungsreaktion nicht größer als etwa 1,5 mm ist.

**18.** System nach einem der Ansprüche 11 bis 16, das ein Laminat mindestens zweier Textilmaterialien umfaßt.

**19.** System nach Anspruch 18, bei dem mindestens einer der besagten Vliesstoffe ein schmelzgeblasenes Textilmaterial ist.

**Revendications**

**1.** Procédé de traitement d'un flux gazeux pour absorber au moins un composant gazeux du flux gazeux qui comprend le passage du flux gazeux sur ou à travers un tissu composé de fibres dont au moins 80% en poids sont sensiblement homogènes sur toute leur épaisseur de sorte que ces fibres se composent sensiblement de polypropylène, dans lequel les dimensions desdites fibres de polypropylène sont inférieures à environ 5 μm, les fibres ayant subi une réaction de copolymérisation avec un monomère de vinyle qui est capable de réagir avec un acide ou une base pour former un sel directement ou indirectement dans des conditions qui se traduisent par le greffage du monomère de vinyle sur les surfaces des fibres, dans lequel le monomère de vinyle greffé sur la surface des fibres améliore la capacité des fibres à absorber ledit composant gazeux.

**2.** Procédé selon la revendication 1, dans lequel le tissu est un tissu non tissé, qui a été de préférence formé par procédé de fusion-soufflage.

**3.** Procédé selon la revendication 1 ou la revendication 2, dans lequel les conditions de la réaction de greffage se traduisent par une capacité d'échange d'ion d'au moins environ 1,5 mmol par gramme de fibres.

**4.** Procédé selon l'une quelconque des revendications 1 à 3, dans lequel la réaction de greffage est réalisée dans des conditions qui se traduisent également par la réticulation du matériau du polymère des fibres.

**5.** Procédé selon l'une quelconque des revendications 1 à 4, dans lequel la réaction de greffage entre le tissu et le monomère de vinyle implique l'exposition du tissu au rayonnement ultraviolet tout en étant imprégné avec une solution du monomère de vinyle.

**6.** Procédé selon l'une quelconque des revendications 1 à 5, dans lequel le poids de base du tissu sec après la réaction de greffage n'est pas supérieur à environ 170g.m$^{-2}$.

**7.** Procédé selon l'une quelconque des revendications 1 à 6, dans lequel l'épaisseur du tissu après la réaction de greffage n'est pas supérieure à environ 1,5 mm.

**8.** Procédé selon l'une quelconque des revendications 1 à 6 comprenant un stratifié d'au moins deux tissus.

**9.** Procédé selon la revendication 8, dans lequel au moins l'un desdits tissus non tissés est un tissu formé par fusion-soufflage.

**10.** Procédé selon l'une quelconque des revendication 1 à 9, dans lequel l'élément de filtre à gaz est intégré dans un système de filtre qui se compose d'un logement doté d'une entrée et d'une sortie pour que le gaz s'écoule sous pression dans et hors du logement respectivement, dans lequel l'élément de filtre à gaz se situe à l'intérieur du logement pour que le gaz s'écoule à travers celui-ci entre l'entrée et la sortie.

**11.** Système de filtre à gaz qui comprend un logement doté d'une entrée et d'une sortie pour que le flux gazeux s'écoule sous pression dans et hors du logement respectivement, et un élément de filtre à gaz pour absorber au moins un composant gazeux d'un flux gazeux, qui comprend un tissu formé à partir de fibres dont au moins 80% en poids sont sensiblement homogènes sur toute leur épaisseur de sorte que ces fibres sont sensiblement formées à partir de polypropylène, dans lequel les dimensions de ces fibres de polypropylène ne sont pas supérieures à environ 5 μm, les fibres ayant subi une réaction de copolymérisation avec un monomère de vinyle qui est capable de réagir avec un acide ou une base pour former un sel directement ou indirectement dans des conditions qui se traduisent par le greffage du monomère de vinyle sur les surfaces des fibres.

**12.** Système selon la revendication 11, dans lequel le tissu est un tissu non tissé, qui a été de préférence formé par procédé de fusion-soufflage.

**13.** Système selon la revendication 11 ou la revendication 12, dans lequel les conditions de la réaction de greffage se traduisent par une capacité d'échange d'ion d'au moins environ 1,5 mmol par gramme de fibres.

**14.** Système selon l'une quelconque des revendications 11 à 13, dans lequel la réaction de greffage est réalisée dans des conditions qui se traduisent également par la réticulation du matériau du polymère des fibres.

**15.** Système selon l'une quelconque des revendications 13 à 14, dans lequel la réaction de greffage entre le tissu et le monomère de vinyle implique l'exposition du tissu au rayonnement ultraviolet tout en étant imprégné avec une solution du monomère de vinyle.

**16.** Système selon l'une quelconque des revendications 11 à 15, dans lequel le poids de base du tissu sec après la réaction de greffage n'est pas supérieur à environ g.m$^{-2}$.

**17.** Système selon l'une quelconque des revendications 11 à 16, dans lequel l'épaisseur du tissu après la réaction de greffage n'est pas supérieur à environ 1,5 mm.

**18.** Système selon l'une quelconque des revendications 11 à 16, comprenant un stratifié d'au moins deux tissus.

**19.** Système selon la revendication 18, dans lequel au moins l'un des tissus non tissés est un tissé traité par procédé de fusion-soufflage.

**FIGURE 1**

# FIGURE 2

**FIGURE 3**